# EUROPEAN PATENT APPLICATION

(11) **EP 2 159 253 A1**
(43) Date of publication of application: **03.03.2010**
(21) Application number: 08163503.9
(22) Date of filing: 02.09.2008
(51) Int. Cl.: C08J 5/18, C08K 5/00, B32B 27/00

(54) **Metallocene-catalyzed polypropylene cast or blown film with improved film forming properties.**

(71) Applicant: Total Petrochemicals Research Feluy, 7181 Seneffe (Feluy) (BE)
(72) Inventor: Radermacher, Fabienne, B - 6230, OBAIX (BE)

(57) **Abstract**

The present invention relates to a cast or blown film wherein at least one layer comprises a metallocene-catalyzed propylene polymer and an alpha-nucleating agent. Said cast or blown film is characterized by improved film forming properties and good optical and mechanical properties. Further, the present invention relates to a multilayer film and a laminate comprising said cast or blown film. Additionally, the present invention relates to a process for producing such a cast or blown film, multilayer film and laminate.

## Description

### Field of the invention

The present invention relates to a cast or blown film wherein at least one layer comprises a metallocene-catalyzed propylene polymer and an alpha-nucleating agent. Said cast or blown film is characterized by improved film forming properties and good optical and mechanical properties. Further, the present invention relates to a multilayer film and a laminate comprising said cast or blown film. Additionally, the present invention relates to a process for producing such a cast or blown film, multilayer film and laminate.

### The technical problem and the prior art

Polypropylene films may be produced by a number of different production processes, one of which is the cast film process. In the cast film process polypropylene is melt-extruded through a slot die onto a chill roll. One of the primary functions of the chill roll is the removal of thermal energy from the molten polypropylene film, thus leading to the solidification of the polypropylene.

The polypropylenes that are conventionally used in the cast film process in general have a melt flow index from 6 dg/min to 12 dg/min. In order to allow for improved processing they frequently have a narrow molecular weight distribution. When the polypropylene is produced by a Ziegler-Natta catalyst the molecular weight distribution of the polypropylene directly recovered from the polymerization reactor is too large and needs to be narrowed for example by chemical degradation (visbreaking). By comparison, polypropylenes produced with metallocene-based polymerization catalysts already have an inherent narrow molecular weight distribution and therefore need not be subjected to visbreaking.

Thus, from their molecular weight distribution metallocene-catalyzed polypropylenes are more suited for use in the cast film process than Ziegler-Natta polypropylenes. However, it has been found that cast films made from metallocene-catalyzed polypropylenes have sometimes unexplainably resulted in films with poor optical properties.

Alternatively, polypropylene films may be produced by the blown film process, wherein polypropylene is melt-extruded through an annular die. The molten bubble passes through an air ring, which expands the bubble and aids in cooling the molten polypropylene. Further cooling of the bubble can be done either by using water on the outer and/or inner surfaces of the bubble (water-quenched blown film) or by using air on the outer and/or inner surfaces of the bubble (air-quenched blown film). The cooled bubble is finally collapsed and wound. Optionally, it can be slit and wound on two separate rolls.

The polypropylenes conventionally used in the blown film process generally have a melt flow index in the range from 6 dg/min to 12 dg/min when used in water-quenched blown film and from 0.8 dg/min or even less to 4 dg/min in the air-quenched blown film process.

In contrast with the cast film process, the polypropylenes used in the blown film process generally have larger molecular weight distributions. Thus, metallocene-catalyzed polypropylenes do not at first seem predestined for use in blown film processes.

It is therefore an object of the present invention to provide a cast or blown film having good optical properties, wherein the cast or blown film comprises at least one layer comprising a metallocene-catalyzed polypropylene.

It is another object of the present invention to provide a cast or blown film with good optical properties, wherein the cast or blown film comprises at least one layer comprising a metallocene-catalyzed polypropylene, said cast or blown film being obtained under high temperature chill roll conditions.

Further, it is an object of the present invention to provide a cast or blown film with good mechanical properties, wherein the cast or blown film comprises at least one layer comprising a metallocene-catalyzed polypropylene.

Furthermore, it is an object of the present invention to provide a cast or blown film with good processability.

In addition, it is an object of the present invention to provide a process for the production of such cast or blown film.

In particular, it is an object of the present invention to provide a process for the production of a cast or blown film with good optical properties, wherein the cast or blown film comprises at least one layer comprising a metallocene-catalyzed polypropylene, said process being characterized by a limitation in quenching of the polypropylene.

### Brief description of the invention

The present inventors have discovered that at least one of these objects can be met by the present invention.

Thus, the present invention provides a cast or blown film, wherein at least one layer comprises
(i) at least 50 % by weight, relative to the total weight of said layer, of a metallocene-catalyzed propylene polymer and
(ii) from 10 ppm to 5000 ppm of an alpha-nucleating agent, relative to the total weight of said metallocene-catalyzed propylene polymer in said layer.

Further, the present invention also provides a laminate comprising such a cast or blown film and the use of such a cast or blown film and laminate.

Additionally, the present invention provides a process for the production of the inventive cast film, the process comprising the steps of
(a) providing a propylene polymer composition comprising at least 50 % by weight, relative to the total weight of said propylene polymer composition, of a metallocene-catalyzed propylene polymer and from 10 ppm to 5000 ppm, relative to the total weight of said metallocene-catalyzed propylene polymer, of an alpha-nucleating agent to a first extruder,
(c) melt-extruding the propylene polymer composition of step (a) through a slit die to form a first extrudate, and
(f) cooling the extrudate obtained in the preceding step by means of at least one chill roll to form a cast film.

Furthermore, the present invention provides a process for the production of the inventive blown film, the process comprising the steps of
(a) providing a propylene polymer composition comprising at least 50 % by weight, relative to the total weight of said propylene polymer composition, of a metallocene-catalyzed propylene polymer and from 10 ppm to 5000 ppm, relative to the total weight of said metallocene-catalyzed propylene polymer, of an alpha-nucleating agent to a first extruder,
(c) melt-extruding the propylene polymer composition of step (a) through an annular die to form a first extrudate, and
(f) cooling the extrudate obtained in the preceding step by means of air and/or water on the outer and/or inner surfaces of the extrudate to form a blown film

Finally, the present invention also relates to the use of the cast or blown film or the laminate for food packaging, barrier packaging and packaging of medical devices.

### Detailed description of the invention

For the purposes of the present invention, the terms "polypropylene" and "propylene polymer" are used synonymously.

For the purposes of the present invention, the preferred thickness of a film is in the range from 5 µm to 300 µm. More preferably, the thickness is at least 10 µm or 20 µm, even more preferably at least 50 µm, still even more preferably at least 75 µm, and most preferably at least 100 µm. More preferably, the thickness is at most 250 µm, and most preferably at most 200 µm.

For the purposes of the present invention a multilayer film is defined as having been produced in a single extrusion process, i.e. by co-extrusion of the different layers of the film.

For the purposes of the present invention a laminate is defined as having been produced by combining at least two films that were produced independently from one another.

The cast or blown film of the present invention comprises at least one layer, in the following referred to as "polypropylene layer", which comprises a metallocene-catalyzed propylene polymer and an alpha-nucleating agent. The cast or blown film of the present invention may also be a multilayer cast or blown film, wherein at least one of the layers comprises a metallocene-catalyzed propylene polymer and an alpha-nucleating agent.

It is essential that the polypropylene used in the present invention is a metallocene-catalyzed propylene polymer, i.e. that it is produced in presence of a metallocene-based polymerization catalyst. The use of a metallocene-based polymerization catalyst imparts specific properties to the propylene polymer. For example, metallocene-catalyzed propylene polymers are characterized by quite narrow molecular weight distribution as compared to propylene polymers produced by Ziegler-Natta catalysts. In propylene polymerization using a Ziegler-Natta catalyst the propylene always undergoes a 1,2-insertion into the growing polymer chain, whereas metallocene-based polymerization catalysts always result in a certain percentage of 2,1-insertions.

The polymerization of propylene and one or more optional comonomers is performed in the presence of one or more metallocene-based polymerization catalysts comprising one or more metallocene components, a support and an activating agent having an ionizing action. Such metallocene-based polymerization catalysts are known to the person skilled in the art and need not be explained in detail.

The metallocene component used to prepare the metallocene-catalyzed propylene polymer can be any bridged metallocene known in the art. Preferably it is a metallocene represented by the following general formula.

µ-R¹(C₅R²R³R⁴R⁵)(C₅R⁶R⁷R⁸R⁹)MX¹X² (I)

wherein
the bridge R¹ is -(CR¹⁰R¹¹)ₚ- or -(SiR¹⁰R¹¹)ₚ- with p = 1 or 2, preferably it is -(SiR¹⁰R¹¹)-;
M is a metal selected from Ti, Zr and Hf, preferably it is Zr;
X¹ and X² are independently selected from the group consisting of halogen, hydrogen, C₁-C₁₀ alkyl, C₆-C₁₅ aryl, alkylaryl with C₁-C₁₀ alkyl and C₆-C₁₅ aryl;
R², R³, R⁴, R⁵, R⁶, R⁷, R⁸, R⁹, R¹⁰ and R¹¹ are each independently selected from the group consisting of hydrogen, C₁-C₁₀ alkyl, C₅-C₇ cycloalkyl, C₆-C₁₅ aryl, alkylaryl with C₁-C₁₀ alkyl and C₆-C₁₅ aryl, or any two neighboring R may form a cyclic saturated or non-saturated C₄-C₁₀ ring; each R², R³, R⁴, R⁵, R⁶, R⁷, R⁸, R⁹, R¹⁰ and R¹¹ may in turn be substituted in the same way.

The preferred metallocene components are represented by the general formula (I), wherein
the bridge R¹ is SiR¹⁰R¹¹;
M is Zr;
X¹ and X² are independently selected from the group consisting of halogen, hydrogen, and C₁-C₁₀ alkyl; and
(C₅R²R³R⁴R⁵) and (C₅R⁶R⁷R⁸R⁹) are indenyl of the general formula C₉R¹²R¹³R¹⁴R¹⁵R¹⁶R¹⁷R¹⁸R¹⁹ wherein R¹², R¹³, R¹⁴, R¹⁵, R¹⁶, R¹⁷, R¹⁸ and R¹⁹ are each independently selected from the group consisting of hydrogen, C₁-C₁₀ alkyl, C₅-C₇ cycloalkyl, C₆-C₁₅ aryl, and alkylaryl with C₁-C₁₀ alkyl and C₆-C₁₅ aryl, or any two neighboring R may form a cyclic saturated or non-saturated C₄-C₁₀ ring;
R¹⁰ and R¹¹ are each independently selected from the group consisting of C₁-C₁₀ alkyl, C₅-C₇ cycloalkyl, and C₆-C₁₅ aryl, or R¹⁰ and R¹¹ may form a cyclic saturated or non-saturated C₄-C₁₀ ring; and
each R¹⁰, R¹¹, R¹², R¹³, R¹⁴, R¹⁵, R¹⁶, R¹⁷, R¹⁸ and R¹⁹ may in turn be substituted in the same way.

Particularly suitable metallocenes are those having C₂-symmetry.

Examples of particularly suitable metallocenes are:
dimethylsilanediyl-bis(cyclopentadienyl)zirconium dichloride,
dimethylsilanediyl-bis(2-methyl-cyclopentadienyl)zirconium dichloride,
dimethylsilanediyl-bis(3-methyl-cyclopentadienyl)zirconium dichloride,
dimethylsilanediyl-bis(3-tert-butyl-cyclopentadienyl)zirconium dichloride,
dimethylsilanediyl-bis(3-tert-butyl-5-methyl-cyclopentadienyl)zirconium dichloride,
dimethylsilanediyl-bis(2,4-dimethyl-cyclopentadienyl)zirconium dichloride,
dimethylsilanediyl-bis(indenyl)zirconium dichloride,
dimethylsilanediyl-bis(2-methyl-indenyl)zirconium dichloride,
dimethylsilanediyl-bis(3-methyl-indenyl)zirconium dichloride,
dimethylsilanediyl-bis(3-tert-butyl-indenyl)zirconium dichloride,
dimethylsilanediyl-bis(4,7-dimethyl-indenyl)zirconium dichloride,
dimethylsilanediyl-bis(tetrahydroindenyl)zirconium dichloride,
dimethylsilanediyl-bis(benzindenyl)zirconium dichloride,
dimethylsilanediyl-bis(3,3'-2-methyl-benzindenyl)zirconium dichloride,
dimethylsilanediyl-bis(4-phenyl-indenyl)zirconium dichloride,
ethylene-bis(indenyl)zirconium dichloride,
ethylene-bis(tetrahydroindenyl)zirconium dichloride,
isopropylidene-(3-tert-butyl-5-methyl-cyclopentadienyl)(fluorenyl) zirconium dichloride.

The polymerization of propylene and one or more optional comonomers in presence of a metallocene-based polymerization catalyst can be carried out according to known techniques in one or more polymerization reactors. The metallocene-catalyzed propylene polymer of the present invention is preferably produced by polymerization in liquid propylene at temperatures in the range from 20°C to 100°C. Preferably, temperatures are in the range from 60°C to 80°C. The pressure can be atmospheric or higher. It is preferably between 25 and 50 bar. The molecular weight of the polymer chains, and in consequence the melt flow of the metallocene polypropylene, is regulated by the addition of hydrogen to the polymerization medium.

It is essential that the metallocene-catalyzed propylene polymer is comprised in the polypropylene layer in at least 50 % by weight relative to the total weight of said layer. Preferably, the metallocene-catalyzed propylene polymer is comprised in said layer in at least 70 % by weight, more preferably in at least 90 % by weight, even more preferably in at least 95 % by weight, still even more preferably in at least 97 % by weight and most preferably in at least 99 % by weight.

While the metallocene-catalyzed propylene polymer used in the present invention can be any type of propylene polymer, it is preferred that it is a propylene homopolymer or a random copolymer of propylene and at least one comonomer. Most preferably, the metallocene-catalyzed propylene polymer is a propylene homopolymer.

For a random copolymer the comonomer can be selected from the group consisting of ethylene and C₄-C₁₀ alpha-olefins, such as 1-butene, 1-pentene, 1-hexene, 1-octene, or 4-methyl-1-pentene. Ethylene and 1-butene are the preferred comonomers. Ethylene is the most preferred comonomer.

In case of a random copolymer it is preferred that it comprises at least 0.1 wt% of comonomer(s), more preferably at least 0.2 wt%, even more preferably at least 0.5 wt%, still even more preferably at least 1 wt%, and most preferably at least 2 wt%. Preferably, it comprises up to 6.0 wt% of comonomer(s), more preferably up to 5.0 wt%, even more preferably up to 4.5 wt% and most preferably up to 4.0 wt%.

Preferably the metallocene-catalyzed propylene polymer used in the present invention has a melt flow index (MFI), measured according to ISO 1133, condition L, at 230°C and 2.16 kg, in the range from 0.05 dg/min to 40 dg/min. More preferably, the melt flow index is at least 0.10 dg/min, 0.25 dg/min, 0.50 dg/min, 1.0 dg/min or 2.0 dg/min, even more preferably at least 4.0 dg/min, 6.0 dg/min or 8.0 dg/min, and most preferably at least 10.0 dg/min. More preferably, the melt flow index is at most 35 dg/min, even more preferably at most 30 dg/min and most preferably at most 20 dg/min.

The molecular weight distribution (MWD), defined as the ratio of weight average molecular weight (Mw) over number average molecular weight (Mn), for metallocene-catalyzed propylene polymers generally is in the range from 1.0 to 8.0. Preferably, it is at most 6.0 or 5.0, more preferably at most 4.0, even more preferably at most 3.5, still even more preferably at most 3.0, and most preferably at most 2.5.

Preferably, the metallocene-catalyzed propylene polymer used in the present invention is characterized by a melting temperature in the range from 135°C to 165°C, more preferably in the range from 140°C to 160°C, and most preferably in the range from 145°C to 155°C. Depending upon the comonomer content the metallocene-catalyzed random copolymers, which may be used in the present invention, have a melting temperature in the range from 100°C to 160°C. Melting temperatures can be determined by differential scanning calorimetry (DSC) according to ISO 3146.

Preferably, the metallocene-catalyzed propylene polymer used in the present invention is characterized by a xylene-solubles content of less than 4.0 wt%, more preferably of less than 3.5 wt%, even more preferably of less than 3.0 wt%, still even more preferably of less than 2.5 wt%, and most preferably of less than 2.0 wt%. The xylene solubles content (XS) is determined by dissolving the propylene polymer in refluxing xylene, cooling the solution to 25°C, filtering the solution, and subsequent evaporation of the solvent. The residue, which is the xylene soluble portion of the propylene polymer, is then dried and weighed.

The metallocene-catalyzed propylene polymer used in the present invention preferably is characterized by a high isotacticity, for which the content of mmmm pentads is a measure. Preferably, the content of mmmm pentads is at least 95 %, and most preferably at least 97 wt%. The isotacticity is determined by NMR analysis according to the method described by G.J. Ray et al. in Macromolecules, vol. 10, n° 4, 1977, p. 773-778.

For the present invention it is essential that the metallocene-catalyzed propylene polymer comprises an alpha-nucleating agent, i.e. that it is nucleated. For the purposes of the present invention we define a nucleating agent as a chemical compound that raises the crystallization temperature of a propylene polymer.

It is essential that the alpha-nucleating agent is comprised in the metallocene-catalyzed propylene polymer in an amount from 10 ppm to 5000 ppm, relative to the total weight of the metallocene-catalyzed propylene polymer in the polypropylene layer. Preferably, the amount of alpha-nucleating agent is at least 20 ppm, 30 ppm, 40 ppm, 50 ppm, 60 ppm, 70 ppm, 80 ppm, 90 ppm, 120 ppm, 140 ppm, 160 ppm, 180 ppm or 200 ppm, relative to the total weight of the metallocene-catalyzed propylene polymer in the polypropylene layer. Preferably, the amount of alpha-nucleating agent is at most 4000 ppm, 3000 ppm, 2000 ppm, 1800 ppm, 1600 ppm, 1400 ppm, 1200 ppm, 1000 ppm, 900 ppm, 800 ppm, 700 ppm, 600 ppm or 500 ppm relative to the total weight of the metallocene-catalyzed propylene polymer in the polypropylene layer.

The nucleating agent used in the present invention can be any of the alpha-nucleating agents known to the skilled person. It is, however, preferred that the alpha-nucleating agent be selected from the group consisting of talc, carboxylate salts, sorbitol acetals, phosphate ester salts, substituted benzene tricarboxamides and polymeric nucleating agents, as well as blends of these. Phosphate ester salts and carboxylate salts are more preferred. Phosphate ester salts are most preferred.

Examples for carboxylate salts used as nucleating agents in the present invention are organocarboxylic acid salts. Particular examples are sodium benzoate and lithium benzoate. The organocarboxylic acid salts may also be alicyclic organocarboxylic acid salts, preferably bicyclic organodicarboxylic acid salts and more preferably a bicyclo[2.2.1]heptane dicarboxylic acid salt. A nucleating agent of this type is sold as HYPERFORM® HPN-68 by Milliken Chemical.

Examples for sorbitol acetals are dibenzylidene sorbitol (DBS), bis(p-methyl-dibenzylidene sorbitol) (MDBS), bis(p-ethyl-dibenzylidene sorbitol) and bis(3,4-dimethyl-dibenzylidene sorbitol) (DMDBS). Bis(3,4-dimethyl-dibenzylidene sorbitol) (DMDBS) is preferred. These can for example be obtained from Milliken Chemical under the trade names of Millad 3905, Millad 3940 and Millad 3988.

Examples of phosphate ester salts are salts of 2,2'-methylene-bis-(4,6-di-tert-butylphenyl)phosphate. Such phosphate ester salts are for example available as NA-11, NA-21 or NA-71 from Asahi Denka.

Examples of substituted tricarboxamides are those of the following general formula 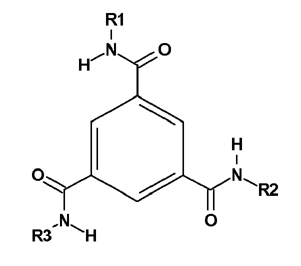 wherein R1, R2 and R3, independently of one another, are selected from C₁-C₂₀ alkyls, C₅-C₁₂ cycloalkyls, or phenyl, each of which may in turn by substituted with C₁-C₂₀ alkyls, C₅-C₁₂ cycloalkyls, phenyl, hydroxy, C₁-C₂₀ alkylamino or C₁-C₂₀ alkyloxy etc. Examples for C₁-C₂₀ alkyls are methyl, ethyl, n-propyl, n-butyl, iso-butyl, tert-butyl, n-pentyl, iso-pentyl, 1,1-dimethylpropyl, 1,2-dimethylpropyl, 3-methylbutyl, hexyl, heptyl, octyl or 1,1,3,3-tetramethylbutyl. Examples for C₅-C₁₂ cycloalkyl are cyclopentyl, cyclohexyl, cyclooctyl, cyclododecyl, adamantyl, 2-methylcyclohexyl, 3-methylcyclohexyl or 2,3-dimethylcyclohexyl. Such nucleating agents are disclosed in WO 03/102069 and by Blomenhofer et al. in Macromolecules 2005, 38, 3688-3695.

Examples of polymeric nucleating agents are polymeric nucleating agents containing vinyl compounds, which are for example disclosed in EP-A1-0152701 and EP-A2-0368577. The polymeric nucleating agents containing vinyl compounds can either be physically or chemically blended with the metallocene polypropylene. In physical blending the polymeric nucleating agent containing vinyl compounds is mixed with the metallocene-catalyzed propylene polymer in an extruder or in a blender. In chemical blending the metallocene-catalyzed propylene polymer comprising the polymeric nucleating agent containing vinyl compounds is produced in a polymerization process having at least two stages, in one of which the polymeric nucleating agent containing vinyl compounds is produced. Preferred vinyl compounds are vinyl cycloalkanes or vinyl cycloalkenes having at least 6 carbon atoms, such as for example vinyl cyclopentane, vinyl-3-methyl cyclopentane, vinyl cyclohexane, vinyl-2-methyl cyclohexane, vinyl-3-methyl cyclohexane, vinyl norbornane, vinyl cylcopentene, vinyl cyclohexene, vinyl-2-methyl cyclohexene. The most preferred vinyl compounds are vinyl cyclopentane, vinyl cyclohexane, vinyl cyclopentene and vinyl cyclohexene.

Further examples of polymeric nucleating agents are poly-3-methyl-1-butene, polydimethylstyrene, polysilanes and polyalkylxylenes. As explained for the polymeric nucleating agents containing vinyl compounds, these polymeric nucleating agents can be introduced into the metallocene-catalyzed propylene polymer either by chemical or by physical blending.

It is also possible to use high-density polyethylene, such as for example Rigidex HD6070EA, available from INEOS Polyolefins, or a polypropylene having a fractional melt flow, or a polypropylene that comprises a fraction of fractional melt flow.

Further, it is possible to use blends of nucleating agents, such as for example a blend of talc and a phosphate ester salt or a blend of talc and a polymeric nucleating agent containing vinyl compounds.

The alpha-nucleating agent may be introduced into the metallocene-catalyzed propylene polymer by blending a metallocene-catalyzed propylene polymer and an alpha-nucleating agent either in pure form or in form of a masterbatch, for example by dry-blending or by melt-blending. It is within the scope of the present invention that the alpha-nucleating agent can be introduced into the metallocene-catalyzed propylene polymer by blending metallocene-catalyzed propylene polymer and a nucleated thermoplastic polymer, e.g. a masterbatch, wherein said thermoplastic polymer is different from metallocene-catalyzed propylene polymer.

The metallocene-catalyzed propylene polymer of the present invention may also comprise additives, such as for example antioxidants, light stabilizers, acid scavengers, lubricants, antistatic agents, fillers, colorants. An overview of useful additives is given in Plastics Additives Handbook, ed. H. Zweifel, 5th edition, Hanser Publishers.

The cast or blown film of the present invention is characterized by good optical properties. Preferably, the cast or blown film of the present invention has a haze value of at most 10 %, preferably of at most 7.5 %, and most preferably of at most 5.0 %. Preferably, the gloss is at least 50, more preferably at least 60, and most preferably of at least 70. The haze value is determined in accordance with ISO 14782. Gloss is determined in accordance with ASTM D 2457 at an angle of 45°.

The present invention is of particular advantage for films, which during production suffer from a limitation on quenching. Such limitations in quenching occur for example when the films, which may be monolayer or multilayer films, are too thick. Alternatively limitations in quenching might also occur when the film temperature is too high for the polypropylene to be effectively quenched, for example in the case of films comprising a polypropylene layer and a layer of a polymer with higher melting temperature than polypropylene, or in films where the polypropylene layer is not in direct contact with the cooling means.

The cast or blown film of the present invention as described above may also be part of a multilayer structure, i.e. one having at least two layers, such as for example a multilayer film or a laminate. Thus, the present invention also provides a multilayer film or a laminate comprising a polypropylene layer as defined above and a further polymer layer comprising at least 50 % by weight, relative to the total weight of said further polymer layer, of a further polymer. Preferably, said further polymer is comprised in said further polymer layer in at least 70 % by weight, more preferably in at least 90 % b weight, even more preferably in at least 95 % by weight, still even more preferably in at least 97 % by weight and most preferably in at least 99 % by weight.

The choice of said further polymer is not particularly limited. Preferably, it is selected from the group consisting of polyethylenes (PE), ethylene vinyl acetate (EVA), ethylene vinyl alcohol (EVOH), polycarbonates (PC), polyesters, fluoropolymers (for example polymers of vinylidene fluoride (H₂C=CF₂) and/or copolymers of vinylidene fluoride and hexafluoropropylene (F₂C=CF-CF₃)), polyamides, polyvinyl chloride and polystyrene.

More preferably, said further polymer layer comprises at least 50 % by weight, relative to the total weight of said layer, of a polymer that has a higher melting temperature than the metallocene-catalyzed propylene polymer. Preferably, the melting temperature of the polymer with the higher melting temperature is at least 170°C, more preferably at least 180°C, even more preferably at least 190°C and most preferably at least 200°C.

Preferred examples of polymers with a higher melting temperature are polyesters, which may be saturated or unsaturated polyesters, and polyamides. Of the polyesters saturated polyesters are preferred.

Saturated polyester that may be used in the present invention are characterized by the following chemical structure

[-C(=O)-C₆H₄-C(=O)O-(CH₂-CH₂)ₙ-O-]ₓ

wherein n is an integer from 1 to 10, with preferred values being 1 or 2.

Polyamides that may be used in the present invention are characterized by one of the following two chemical structures

[-NH-(CH₂)ₙ-C(=O)-]ₓ

[-NH-(CH₂)ₘ-NH-C(=O)-(CH₂)ₙ-C(=O)-]ₓ

wherein m and n may be independently chosen from one another and be an integer from 1 to 20.

Specific examples of polyesters are polyethylene terephthalate (PET) and polybutylene terephthalate (PBT). Specific examples of polyamides are polyamides 4, 6, 7, 8, 9, 10, 11, 12, 46, 66, 610, 612 and 613.

Alternatively, the present invention also provides a multilayer film of a laminate comprising a polypropylene layer as defined above and a metallic layer. Said metallic layer may for example be an aluminium layer.

Optionally, the multilayer films and laminates of the present invention may comprise tie layers to provide adhesion between layers.

The cast or blown films, multilayer films and laminates of the present invention are used in food packaging, barrier packaging and packaging of medical devices. In food packaging particularly preferred are retort packaging and reheat packaging, e.g. for re-heating in a microwave oven.

Prior to the present invention, the quality and the properties of cast or blown films made from metallocene-catalyzed propylene polymer have given rise to doubts on their industrial applicability. Sometimes such cast or blown films were unexplainably found to have poor properties, in particular poor optical properties. The present inventors have now found that the processability and in particular the consistency of the optical properties of metallocene-catalyzed propylene polymers in cast or blown film production can be drastically improved by the addition of an alpha-nucleating agent to the metallocene-catalyzed propylene polymer.

In consequence, the present invention also provides a process for the production of cast films, wherein a polypropylene composition, which comprises at least 50 % by weight of a metallocene-catalyzed propylene polymer as defined above and from 10 ppm to 5000 ppm of an alpha-nucleating agent as defined above, both relative to the total amount of the polypropylene composition, is provided to a first extruder. Said polypropylene composition is melt-extruded through a slit die to form a first extrudate. Preferably, the melt temperature in the melt-extrusion step is in the range from 200°C to 300°C, more preferably in the range from 230°C to 275°C. Subsequently, said first extrudate is cooled by means of at least one chill roll, which is cooled with water, so as to form a cast film. In the typical cast film process of the prior art it is preferred that the inlet water temperature of the chill roll is in the range from 10°C to 30°C in order to optimize gloss and transparency of the cast films. Inlet water temperatures of 30°C and higher lead to hazy films and are therefore avoided. A process for cast film production is for example described in Polypropylene Handbook, ed. Nello Pasquini, 2nd edition, Carl Hanser Verlag, Munich 2005, pages 409-411.

In addition to the steps for the production of the cast film of the present invention as described above the process for the production of the multilayer films of the present invention further comprises the step of providing at least one further polymer composition to a corresponding number of further extruders. Said at least one further polymer composition is melt-extruded through a slit die to form at least one further extrudate. Then, this at least one further extrudate and the first extrudate, i.e. that of the polypropylene composition, are combined to form a combined extrudate, which is then cooled by means of at least one chill roll as described above.

Further, the present invention provides a process for the production of blown films, wherein a polypropylene composition, which comprises at least 50 % by weight of a metallocene-catalyzed propylene polymer as defined above and from 10 ppm to 5000 ppm of an alpha-nucleating agent as defined above, both relative to the total amount of the polypropylene composition, is provided to a first extruder. Said polypropylene composition is melt-extruded through an annular die to form a first extrudate, which is in form of a bubble. Preferably, the melt temperature in the melt-extrusion step is in the range from 200°C to 300°C, more preferably in the range from 230°C to 275°C. Subsequently, said first extrudate passes through an air ring, which expands the bubble and aids in cooling the molten polypropylene. Said first extrudate is then cooled by means of air and/or water on the outer and/or inner surfaces of said first extrudate. Processes for blown film production are for example described in Polypropylene Handbook, ed. Nello Pasquini, 2nd edition, Carl Hanser Verlag, Munich 2005, pages 412-414.

In addition to the steps for the production of the blown film of the present invention as described above the process for the production of the multilayer films of the present invention further comprises the steps of providing at least one further polymer composition to a corresponding number of further extruders. Said at least one further polymer composition is melt-extruded through an annular die to form at least one further extrudate. Then, this at least one further extrudate and the first extrudate, i.e. that of the polypropylene composition, are combined to form a combined extrudate, which is in form of a bubble; and which is then cooled as described above.

It has now been surprisingly found that the use of a metallocene-catalyzed propylene polymer comprising an alpha-nucleating agent in an amount from 10 ppm to 5000 ppm drastically widens the processing window, in which transparent and glossy films can be produced. Hence, in cast film production test runs it has been possible to use higher inlet water temperatures, permitting chill roll temperatures of up to 90°C, while still producing films of good transparency. In consequence, the process of the present invention particularly permits to improve the optical properties of cast films having a thickness of above 75 µm, and in particularly of above 100 µm or of cast films that by necessity have such a structure that the polypropylene layer cannot be in direct contact with the chill roll.

Preferably, the chill roll temperature for the production of the cast films of the present invention is at least 40°C, more preferably at least 50°C and most preferably at least 60°C.

Surprisingly, it has also been found that the use of a metallocene-catalyzed propylene polymer comprising an alpha-nucleating agent in an amount from 10 ppm to 5000 ppm also offers advantages in blown film production. In particular, it has been found to allow the production of blown films with very good optical properties. Thus, the present invention also shows advantages in the production of thick blown films, the production of which has hereto suffered from lack of optical properties and/or commercially viable production speeds. Alternatively, in the production of blown films of standard thicknesses, the present invention is believed to allow an increase in production speed while keeping the good optical properties of lower production speeds.

The wider processing window has been found to be of particular advantage in the production of multilayer films and laminates comprising a polypropylene layer as defined above and a layer of a polymer with a melting temperature higher than metallocene-catalyzed propylene polymer. Traditionally, the production of such multilayer films and laminates has posed problems in that a lack of transparency of the polypropylene layer resulted in unacceptable optical properties for the multilayer film or laminate.

Thus, in the preferred process for the production of multilayer films at least one of the at least one further polymer compositions comprises at least 50 % by weight, relative to the total weight of said at least one further polymer composition, of a further polymer as defined above.

The present invention also provides a process for the production of laminates comprising the cast or blown film of the present invention. Accordingly the cast or blown film of the present invention, either as a monolayer or as a multilayer film, is combined with at least one further film by means of pressure, heat, adhesives or any combination of these. It is preferred that said at least one further film comprises at least one layer of a further polymer as defined above.

The advantages of the present invention are further illustrated by the following examples.

### Examples

### TEST METHODS

Melt flow index is measured in accordance with ISO 1133, condition L, at 230°C and 2.16 kg.

Determination of optical properties: Gloss was measured in accordance with ASTM-D 2457 at an angle of 45°. Haze was determined in accordance with ISO 14782.

Determination of mechanical properties: Dart drop was determined in accordance with ISO 7765-1. Secant modulus was determined in accordance with ASTM D-882-02. Elmendorf tear strength was determined in accordance with ISO 6383-2.

All tests for optical and mechanical properties were performed on samples of the respective film.

### METALLOCENE-CATALYZED PROPYLENE POLYMER

The following examples were conducted using a metallocene-catalyzed propylene homopolymer having a melt flow index of 13.8 dg/min and a melting temperature of 152°C. The propylene homopolymer, which was produced on a commercial propylene polymerization plant using a commercial metallocene-based polymerization catalyst with a dimethylsilyl-bridged bis(indenyl)zirconium dichloride derivative as metallocene component.

The metallocene-catalyzed propylene polymer was additivated with a sufficient amount of antioxidants to minimize degradation during processing.

The alpha-nucleating agent was NA-11, a phosphate ester salt-containing alpha-nucleating agent supplied by Asahi Denka, which was added in 250 ppm.

### FILMS

Nucleated and non-nucleated samples of the metallocene-catalyzed propylene polymer were used to produce cast films of 50 µm thickness on a MEAF cast film line having a width of 300 mm and a three roll chill stack with the main chill roll having a roughened surface. For all films produced the processing parameters were as follows:
- Screw temperature profile: 220 / 245 / 245 / 245 / 245 / 245 / 245 / 245°C
- Die temperature: 245°C
- Die gap: 300 µm
- Air gap: 12 mm
- Roll speed: 3.8 m/min

Chill roll temperatures were 30°C to simulate standard cast film production conditions and 70°C to simulate cast film production conditions with reduced quench capabilities, such as for example thicker cast films or cast films in which the polypropylene layer is not in direct contact with the main chill roll.

Properties of the so-produced films are given in table 1 for a chill roll temperature of 30°C and in table 2 for a chill roll temperature of 70°C.

**Table 1**

| | | Example 1 | Example 2 |
|---|---|---|---|
| Additivation | | | |
| Nucleating agent | ppm | none | 250 ppm NA-11 |
| Cast film production | | | |
| Chill roll temperature | °C | 30 | 30 |
| Film thickness | µm | 51.0 | 50.7 |
| Optical properties | | | |
| Gloss | | 89.5 | 86.1 |
| Haze | % | 0.6 | 2.5 |
| Mechanical properties | | | |
| Dart drop | g | 311 | 278 |
| Secant modulus - 1 % | MPa | 755 | 813 |
| Secant modulus - 5 % | MPa | 292 | 317 |
| Elmendorf tear strength in | N/mm | 22.2 | 20.3 |
| machine direction | | | |
| Coefficient of friction | | 1.72 | 1.64 |

**Table 2**

| | | Example 3 | Example 4 |
|---|---|---|---|
| Additivation | | | |
| Nucleating agent | ppm | none | 250 ppm NA-11 |
| Cast film production | | | |
| Chill roll temperature | °C | 70 | 70 |
| Film thickness | µm | 48.8 | 49.5 |
| Optical properties | | | |
| Gloss | | 46.3 | 78.2 |
| Haze | % | 21.5 | 3.5 |
| Mechanical properties | | | |
| Dart drop | g | 50 | 39 |
| Secant modulus - 1 % | MPa | 1173 | 1335 |
| Secant modulus - 5 % | MPa | 461 | 538 |
| Elmendorf tear strength in | N/mm | 5.3 | 3.8 |
| machine direction | | | |
| Coefficient of friction | | 0.63 | 0.56 |

Turning first to the cast films of examples 1 and 2, which were produced at a chill roll temperature of 30°C, i.e. under standard cast film production conditions, one can see that the cast film comprising the alpha-nucleating agent has worse optical properties than the one without any alpha-nucleating agent. In particular, the addition of alpha-nucleating agent seems to result in a more hazy appearance of the cast film. With regards to the mechanical properties one finds that the stiffness of the film, as exemplified by the secant modulus, increases while the impact properties, as exemplified by the dart drop results, get worse with the addition of an alpha-nucleating agent.

Looking then at the cast films of examples 3 and 4, which were produced at a chill roll temperature of 70°C, i.e. under non-standard cast film production conditions, one finds that the cast film comprising the alpha-nucleating agent shows superior optical properties when compared to the cast film without any alpha-nucleating agent. In terms of mechanical properties the cast film comprising the alpha-nucleating agent is better in stiffness but worse in impact properties.

The present inventors have been very surprised to see from the above examples that the optical properties of the cast film comprising the alpha-nucleating agent are only slightly affected by the change in chill roll temperature from 30°C to 70°C. In particular, the haze of the cast film comprising an alpha-nucleating agent remains at constant level. These results clearly show that the addition of an alpha-nucleating agent drastically widens the processing window of metallocene-catalyzed propylene polymer in cast film production, thus allowing a more consistent film quality but also allowing the possibility of increasing the production speed without sacrificing film quality.

The wider processing window in cast film production has been found to be of particular interest in the production of thick films, may they be mono- or multilayer films, or in the production of multilayer films wherein due to the film construction the polypropylene cannot be in direct contact with the chill roll. Without the addition of an alpha-nucleating agent the resulting films would have had a hazy appearance because of the poor optical properties of the polypropylene layer. The addition of an alpha-nucleating agent to the metallocene-catalyzed polypropylene very surprisingly leads to films having good optical properties.

The present results also show that the wider processing window achieved by the present invention may be used to shift the balance between stiffness and impact properties of the cast film. Thus, the use of a higher chill roll temperature leads to cast films having improved rigidity, as evidenced by the higher secant modulus, and lower impact properties, as indicated by the reduced dart drop value. The variation in chill roll temperature allows the production of cast-films having a good optical properties and a tailor-made balance of properties.

The possibility of the present invention to produce polypropylene cast films having drastically improved rigidity while keeping the optical properties is of particular interest for multilayer films or laminates comprising a layer, which in turn comprises a metallocene-catalyzed propylene polymer, and a layer, which comprises polyethylene. The purpose of the polyethylene layer is to impart good impact properties to the film but as a downside leads to a loss in rigidity. The present invention now allows to counteract this drop in rigidity by increasing the chill roll temperature during cast film production and providing a cast film comprising a metallocene-catalyzed propylene polymer, said cast film being characterized by an increased rigidity when compared to other polypropylene comprising cast films.

It has come as an unexpected result of the present invention that the addition of an alpha-nucleating agent to the polypropylene leads to a reduction in the coefficient of friction, thus rendering the film more "slippery". Even more so, it has been surprising that the increase in chill roll temperature leads to a drastic reduction in the coefficient of friction in the films produced according to the present invention.

Thus, the present invention also provides a way to reduce the coefficient of friction of metallocene-catalyzed propylene polymer films.

## Claims

1. Cast or blown film, wherein at least one layer comprises
(i) at least 50 % by weight, relative to the total weight of said layer, of a metallocene-catalyzed propylene polymer and
(ii) from 10 ppm to 5000 ppm of an alpha-nucleating agent, relative to the total weight of said metallocene-catalyzed propylene polymer in said layer.

2. Cast or blown film according to claim 1, wherein the metallocene-catalyzed propylene polymer has a melt flow index in the range from 0.05 dg/min to 40 dg/min, as measured according to ISO 1133, condition L, at 230°C and 2.16 kg.

3. Cast or blown film according to any of the preceding claims, wherein the metallocene-catalyzed propylene polymer is a propylene homopolymer.

4. Cast or blown film according to any of the preceding claims, wherein the alpha-nucleating agent is selected from the group consisting of talc, carboxylate salts, sorbitol acetals, phosphate ester salts, substituted benzene tricarboxamides, and blends of these.

5. Cast or blown film according to any of the preceding claims, wherein the alpha-nucleating agent is a phosphate ester salt or a carboxylate salt.

6. Laminate comprising the cast or blown film of claims 1 to 5.

7. Laminate according to claim 6, wherein the laminate comprises a further layer, wherein said further layer comprises at least 50 % by weight, relative to the total weight of said further layer, of a further polymer which is selected from the group consisting of polyethylenes, ethyl vinyl acetate (EVA), ethyl vinyl alcohol (EVOH), polycarbonates (PC), polyesters, fluoropolymers, polyamides, polyvinyl chloride, and polystyrene.

8. Laminate according to claim 6, wherein the laminate comprises a further layer, wherein said further layer comprises at least 50 % by weight, relative to the total weight of said further layer, of a polymer with a higher melting temperature than metallocene-catalyzed propylene polymer.

9. Process for the production of the cast film of claims 1 to 5, the process comprising the steps of
(a) providing a propylene polymer composition comprising at least 50 % by weight, relative to the total weight of said propylene polymer composition, of a metallocene-catalyzed propylene polymer and from 10 ppm to 5000 ppm, relative to the total weight of said metallocene-catalyzed propylene polymer, of an alpha-nucleating agent to a first extruder,
(c) melt-extruding the propylene polymer composition of step (a) through a slit die to form a first extrudate, and
(f) cooling the extrudate obtained in the preceding step by means of at least one chill roll to form a cast film.

10. The process of claim 9, further comprising the steps of
(b) providing at least one further polymer composition to a corresponding number of further extruders,
(d) melt-extruding the at least one further polymer composition of step (b) through a slit die to form at least one further extrudate,
(e) combining the extrudates of steps (c) and (d) to form a combined extrudate.

11. The process according to claim 9 or claim 10, wherein the chill roll temperature is at least 40°C.

12. Process for the production of the blown film of claims 1 to 5, the process comprising the steps of
(a) providing a propylene polymer composition comprising at least 50 % by weight, relative to the total weight of said propylene polymer composition, of a metallocene-catalyzed propylene polymer and from 10 ppm to 5000 ppm, relative to the total weight of said metallocene-catalyzed propylene polymer, of an alpha-nucleating agent to a first extruder,
(c) melt-extruding the propylene polymer composition of step (a) through an annular die to form a first extrudate, and
(f) cooling the extrudate obtained in the preceding step by means of air and/or water on the outer and/or inner surfaces of the extrudate to form a blown film

13. The process of claim 12, further comprising the steps of
(b) providing at least one further polymer composition to a corresponding number of further extruders,
(d) melt-extruding the at least one further polymer composition of step (b) through an annular die to form at least one further extrudate,
(e) combining the extrudates of steps (c) and (d) to form a combined extrudate.

14. The process according to any of claims 9 to 13, wherein the cast or blown film has a thickness from 5 µm to 300 µm.

15. Use of the cast or blown film or the laminate of claims 1 to 8 for food packaging, barrier packaging and packaging of medical devices.
